# EUROPEAN PATENT APPLICATION

(11) **EP 4 513 688 A1**
(43) Date of publication of application: **26.02.2025**
(21) Application number: 24191972.9
(22) Date of filing: 31.07.2024
(51) Int. Cl.: H01R 43/28, H02G 1/12

(54) **AUTOMATED CABLE WIRE PROCESSING**

(30) Priority: 24.08.2023 US 202318455485
(71) Applicant: The Boeing Company, Arlington, VA 22202 (US)
(72) Inventor: BLACKEN, Lars Eric, Arlington, VA, 22202 (US); MITCHELL, Bradley J., Arlington, VA, 22202 (US); MCCASKEY, Jeffrey Allan, Arlington, VA, 22202 (US); LARSEN, Ty Aaby, Arlington, VA, 22202 (US)
(74) Representative: Hoffmann Eitle

(57) **Abstract**

A method (200) for automated cable wire processing includes receiving a set of two or more cable wires (304A-C), including at least a first cable wire (304A) positioned at a selection position (414), and a second cable wire (304B) positioned away from the selection position (414). A cable selection tool (306) is automatically moved to contact the set of two or more cable wires (304A-C), such that contact between the cable selection tool (306) and the first cable wire (304A) causes a tip portion (706A) of the first cable wire (304A) to extend into a working region (708), and contact between the cable selection tool (306) and the second cable wire (304B) moves a tip portion (706B) of the second cable wire (304B) outside of the working region (708). One or more tip processing operations are applied to the tip portion (704A) of the first cable wire (304A) within the working region (708).

## Description

### FIELD

The invention relates generally to techniques for automated cable wire selection and processing.

### BACKGROUND

Various types of connectors are often used to conductively couple one cable to another, and/or couple a cable to an electronic device, for transmission of data and/or power. Manufacturing of electronic connectors typically requires that one or more processing steps be applied to the cable wires intended for use with the electronic connector. Such processing steps may include insulated jacket cracking, shield trimming, jacket stripping, inspection, and/or contact crimping, as examples.

### SUMMARY

This summary is not an extensive overview of the specification. It is intended to neither identify key or critical elements of the specification nor delineate any scope particular to embodiments of the specification, or any scope of the claims. Its sole purpose is to present some concepts of the specification in a simplified form as a prelude to the more detailed description that is presented in this disclosure.

A method for automated cable wire processing includes receiving a set of two or more cable wires, including at least a first cable wire positioned at a selection position, and a second cable wire positioned away from the selection position. A cable selection tool is automatically moved to contact the set of two or more cable wires, such that contact between the cable selection tool and the first cable wire causes a tip portion of the first cable wire to extend into a working region, and contact between the cable selection tool and the second cable wire moves a tip portion of the second cable wire outside of the working region. One or more tip processing operations are applied to the tip portion of the first cable wire within the working region.

The features, functions, and advantages that have been discussed can be achieved independently in various embodiments or can be combined in yet other embodiments, further details of which can be seen with reference to the following description and drawings.

### BRIEF DESCRIPTION OF THE DRAWINGS

FIGS. 1A-1C schematically illustrate tip processing of a set of cable wires.
FIG. 2 illustrates an example method for automated cable wire processing.
FIGS. 3A and 3B schematically illustrate an example cable tip processing system, in which a cable selection tool is used to select a cable wire.
FIGS. 4A-C schematically illustrate transportation of a set of cable wires to a selection position.
FIG. 5 illustrates aspects of an example cable separation jig.
FIG. 6A illustrates an example cable redirection comb.
FIGS. 6B and 6C illustrate different views of an example cable selection tool.
FIG. 6D illustrates use of a cable selection tool and cable redirection comb to select a cable wire of a set of cable wires.
FIGS. 7A-C schematically illustrate applying tip processing operations to a cable tip in a working region.
FIG. 8 schematically illustrates attaching a conductive contact to a cable wire in a working region.
FIG. 9 schematically shows an example computing system.

### DETAILED DESCRIPTION

The present disclosure is directed to automated techniques for selection and processing of cable wires. For instance, the techniques described herein are usable to prepare a set of cable wires prior to assembly of a cable connector (e.g., wiring harness) by applying one or more processing operations to the tips of the cable wires. Such processing operations can include cutting the cable wires to length, scoring and removal of a segment of insulated jacket near the cable tip, cable shield trimming, conductor stripping, contact crimping, and/or insertion of cable wires into a cable connector housing, as examples.

Any or all of these processing operations are applied to the tip of a cable wire that has been automatically "selected" according to the techniques described herein. Specifically, a cable tip processing system receives a set of two or more cable wires (e.g., transported by a conveyor system down an automated assembly line), and then moves a cable selection tool to contact the set of cable wires. Contact between the cable selection tool and at least one cable wire present at a "selection" position (e.g., due to movement of the conveyor system) causes the cable wire to extend into a working region, where tip processing operations are applied. Contact between the cable selection tool and any other cable wires positioned away from the selection position causes the other cable wires to move away from the working region - e.g., the other cable wires are bent out of the way.

In this manner, processing operations can be applied to one or more selected cable wires at a time, while any non-selected cable wires are moved out of the way. The process can be repeated any number of times to select and process whichever cable wire is currently at the selection position - e.g., a conveyor system may be controlled to place a new cable wire at the selection position, while a previously-selected wire is moved away from the selection position. Furthermore, in some examples, the selection and processing techniques described herein may be performed at one or more stations along an automated assembly line. For instance, jacket scoring and removal may take place at a first station, while contact crimping occurs at a second station, visual inspection takes place at a third station, etc. In this manner, the techniques described herein facilitate automated cable processing techniques that beneficially reduce the manual effort required in assembly of cable connectors. This reduces cost, reduces the incidence rate of defects, and reduces the ergonomic toll on human workers.

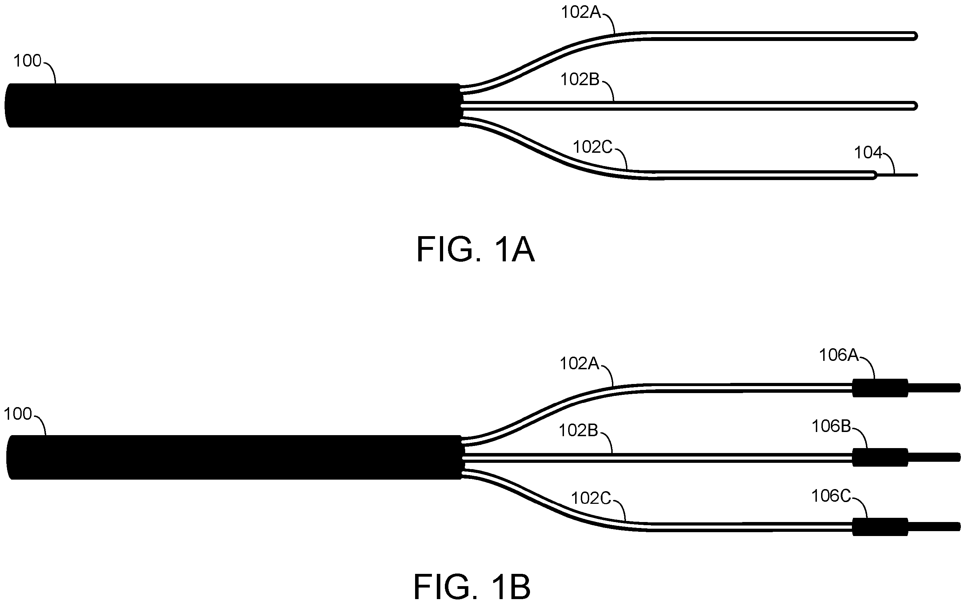

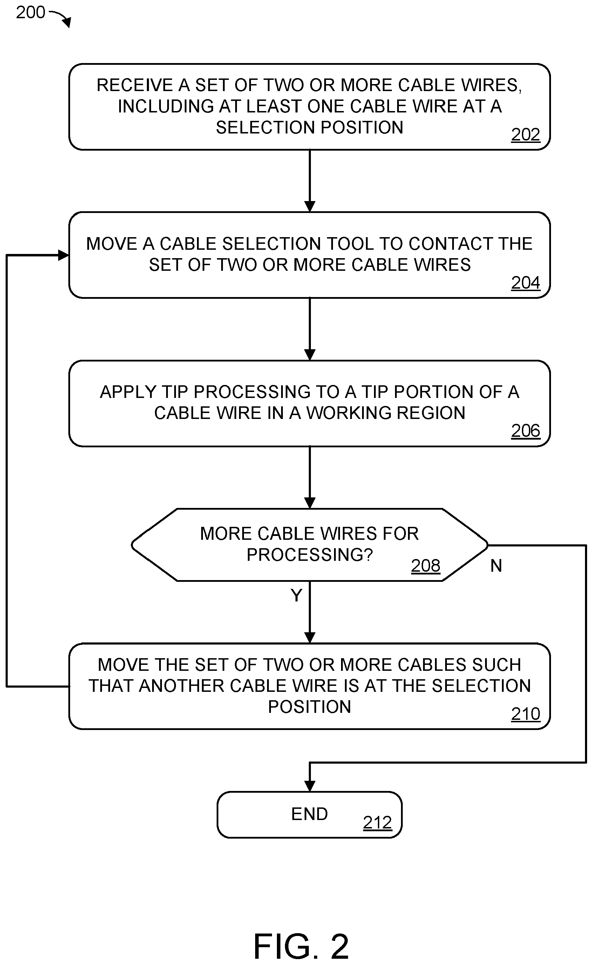

Cable wire processing is schematically illustrated with respect to FIGS. 1A-C. It will be understood that the specific components shown in FIGS. 1A-C, as well as the other FIGS. 2-8 described herein, are highly simplified for the sake of explanation. The sizes, shapes, and specific appearances of the components shown in FIGS. 1A-8 are non-limiting and not drawn to scale.

Specifically, FIG. 1A schematically shows an example cable 100 including three different cable wires 102A-C. FIGS. 1A-C are intended to illustrate example processing operations that may be applied to cable wires after selection via the selection techniques that will be described in more detail below. As used herein, a "cable wire" includes a length of material used for transmission of data and/or power (e.g., copper wire, fiber optic), often coated with a protective material (e.g., plastic or rubber insulation, grounded shielding). In other words, the term "cable wire" is often used herein to refer to more than just the conductive (e.g., copper) or non-conductive (e.g., fiber optic) core of the cable, but may additionally refer to any coating, insulation, and/or shielding applied to the core.

A "cable" includes one or more different cable wires. In cases where a cable only includes one cable wire, then the terms "cable wire" and "cable" may be used interchangeably. However, in some examples, one cable includes two or more cable wires bundled together. For instance, in the example of FIGS. 1A-C, cable 100 is a multi-conductor cable including three different cable wires 102A-C. In other words, cable wires 102A-C take the form of different conductive copper wires each coated in their own respective insulated cable jackets, and also bundled together in additional insulation and/or shielding to form the multi-conductor cable 100. In some embodiments, a "cable" is a shielded twisted pair cable, in which different cable wires include pairs of conductors twisted together and protected by an insulated jacket. The twisted pairs are themselves bundled together and enclosed by additional shielding and/or insulation to form the shielded twisted pair cable. In any case, it will be understood that the selection and processing techniques described herein may be used with a wide range of different suitable types of cables.

As discussed above, tip processing operations applied to a selected cable wire may include scoring and removal of a portion of an insulated jacket of the cable wire. For instance, with respect to cable wire 102C, a portion of the insulated jacket has been stripped away to reveal the conductive core 104. As will be described in more detail below, this may be done after cable wire 102C is selected for processing. For instance, a cable selection tool applied to the set of cable wires may cause cable wire 102C to extend into a working region, where jacket scoring and stripping takes place, while the other cable wires are bent away.

As another non-limiting example, tip processing operations may include attachment of a conductive contact to the cable wire. This is schematically illustrated with respect to FIG. 1B, in which conductive contacts 106A-C have been affixed to the cable wires 102A-C. For instance, as will be described in more detail below, this may be done by a cable contact attachment system that crimps the conductive contacts to the conductive ends of selected cable wires.

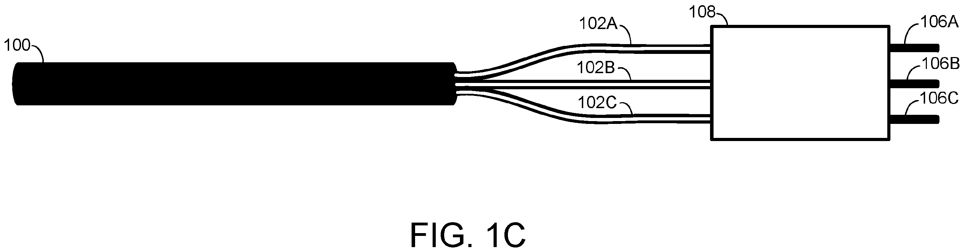

In some examples, the cable wire selection and processing techniques described herein are used to prepare the cable wires for assembly of a cable connector, such as a wiring harness. This is schematically illustrated with respect to FIG. 1C, in which the cable wires 102A-C, including conductive contacts 106A-C, have been inserted into a cable insert module 108. Together, the cable wires, cable insert module, and conductive contacts, constitute a male-type cable connector. In some examples, the assembly shown in FIG. 1C is one component of a larger modular cable connector, where other cables attached to other cable insert modules are collectively retained by a module retainer. It will be understood that the specific size, shape, and appearance of the cable connector shown in FIG. 1C is non-limiting. For instance, in some examples, cable wires may be conductively coupled with female-type recesses instead of, or in addition to, male-type conductive pins.

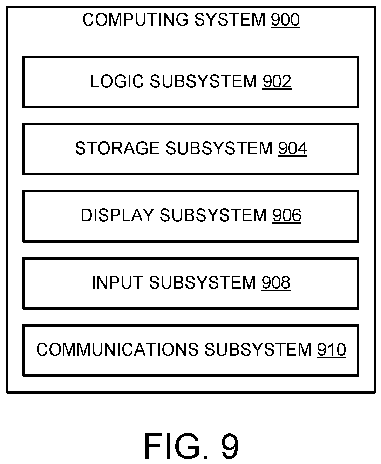

FIG. 2 illustrates an example method 200 for cable wire selection and processing. For instance, method 200 may be used to perform cable processing such as is illustrated in FIGS. 1A-C - e.g., jacket scoring and removal, and/or attachment of conductive contacts, prior to insertion into a module of a cable connector assembly. Method 200 is primarily described as being performed by a cable processing system, which takes the form of any suitable computing system of one or more computing devices. For instance, one or more computing devices may control movements of a cable selection tool, control operation of a conveyor system, control operations of a machine used to directly perform cable processing (e.g., a contact crimping machine), etc. It will be understood that any computing device implementing steps of method 200 has any suitable capabilities, hardware configuration, and form factor. In some examples, method 200 is implemented by computing system 900 described below with respect to FIG. 9.

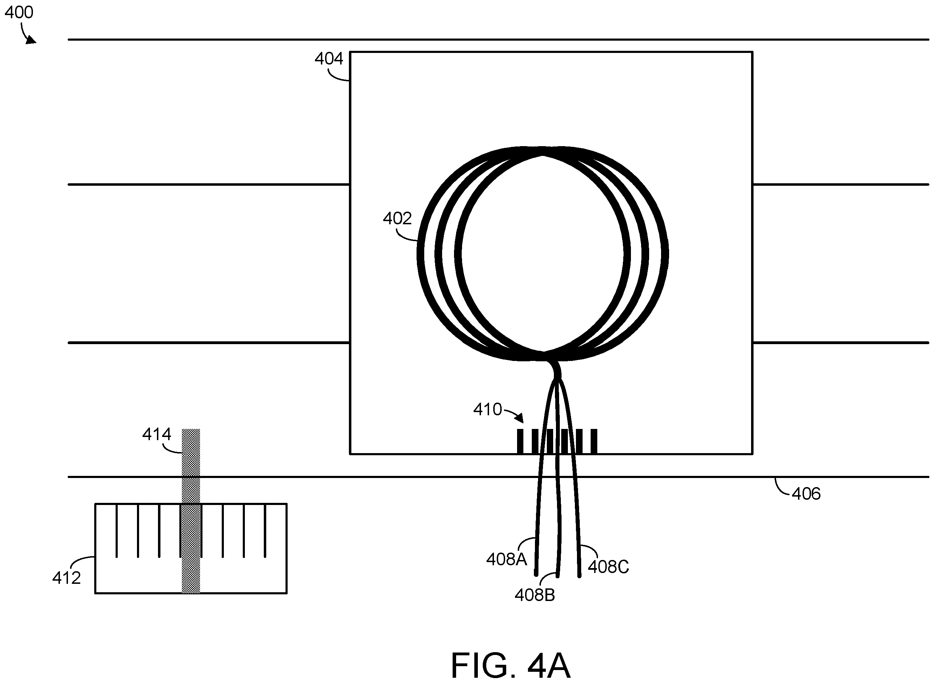

At 202, method 200 includes receiving a set of two or more cable wires for processing, including at least a first cable wire positioned at a selection position, and a second cable wire positioned away from the selection position. In some examples, the set of two or more cable wires are transported by a conveyor system, and thus "receiving" the set of two or more cable wires may include stopping the conveyor system to position the first cable wire at the selection position. This will be described in more detail with respect to FIGS. 4A-C. In other examples, the set of cable wires may be received, and the first cable wire positioned at the selection position, in any other suitable way. For instance, the set of cable wires may be provided to the cable processing system via another suitable mechanism (e.g., via a robotic arm), or manually placed by a human operator, as additional examples.

As will be described in more detail below, the "selection position" refers to a region of space where contact between a cable wire and a cable selection tool causes a tip portion of the cable wire to extend into a working region for processing. As will be described in more detail below, any cable wires that are positioned away from the selection position will, when contacted by the cable selection tool, be bent outside of the working region. As such, the specific area defined as the "selection position" depends on the specific size, shape, position, and range-of-motion of the cable selection tool. Similarly, a "working region" is defined as a region of space in which tip processing operations can be applied to the tip of a cable wire present within the working region. As such, the specific size, shape, and position of the working region depends on the specific implementation - e.g., the capabilities and range-of-motion of any tools used to perform tip processing operations.

Continuing with method 200, at 204, the method includes automatically moving a cable selection tool to contact the set of two or more cable wires. This contact causes a tip portion of a cable positioned at the selection position (e.g., a "first" cable wire) to extend into a working region, while also causing the tip portions of any cable wires positioned away from the selection position (e.g., including a "second" cable wire) to bend outside of the working region.

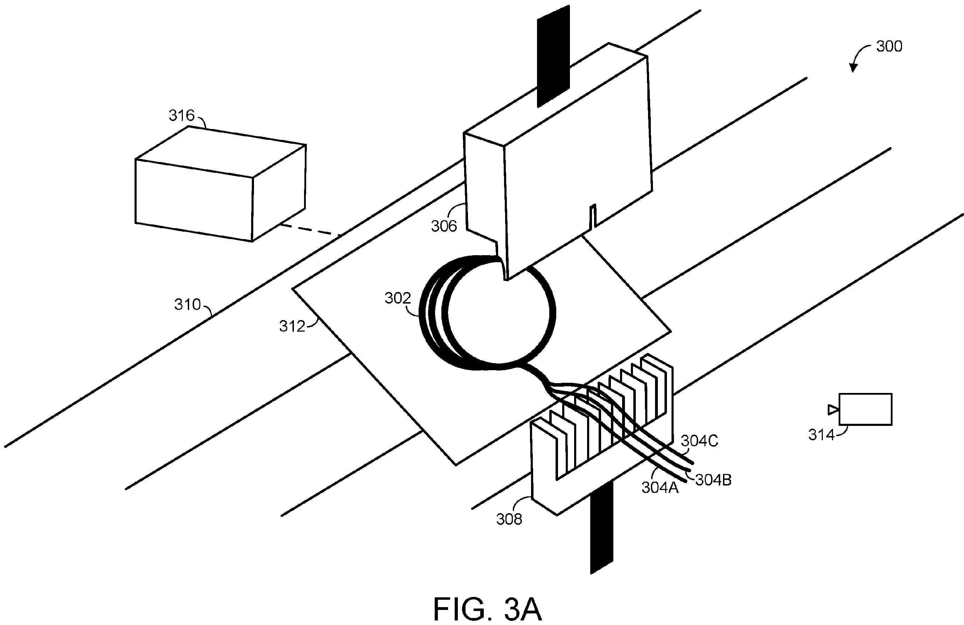

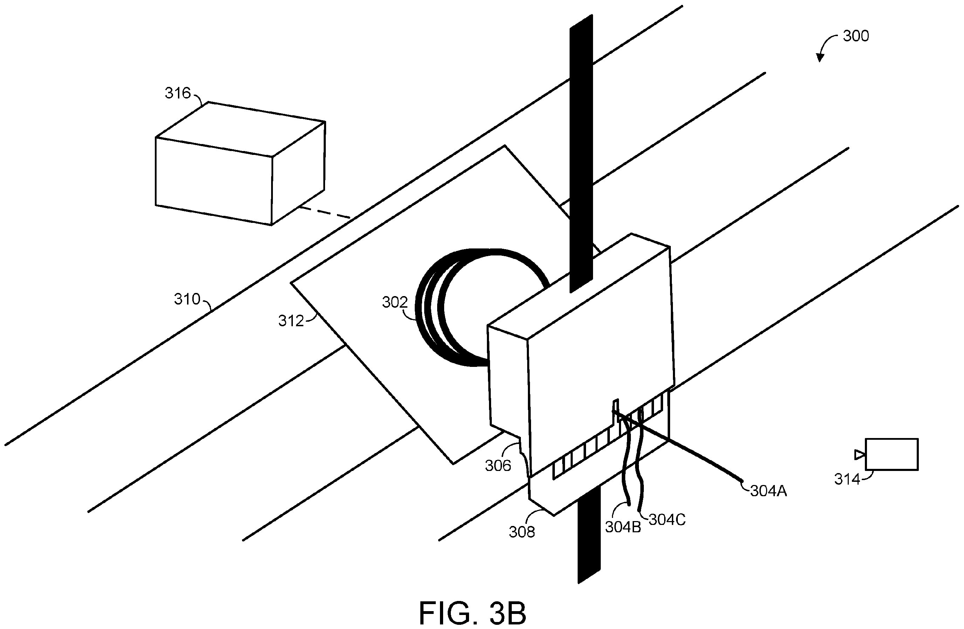

This process is schematically illustrated with respect to FIGS. 3A and 3B. Specifically, FIG. 3A schematically shows an example cable processing system 300, used to process a multi-conductor cable 302. In this example, cable 302 includes three cable wires 304A, 304B, and 304C extending away from the cable 302. In other words, in this example, the set of cable wires 304A-C are bundled together in a common insulated jacket as multi-conductor cable 302, such that individual cable wires may be separately selected and processed. It will be understood that, in other examples, the set of two or more cable wires may include two or more different cables, each of which may include one or more cable wires.

In this example, the cable wires 304A-C are only shown extending from one end of the multi-conductor cable 302. However, it will be understood that cable selection and processing as described herein may be applied to cable wires extending from either or both ends of a multi-conductor cable.

As shown, cable processing system 300 includes a cable selection tool 306, which in this example is positioned above the set of cable wires 304A-C. In this example, the cable processing system 300 additionally includes a cable redirection comb 308. As will be illustrated below with respect to FIG. 3B, movement of the cable selection tool 306 toward the cable redirection comb 308 compresses the set of two or more cable wires 304A-C between the cable selection tool 306 and the cable redirection comb 308, which causes selection of a cable wire positioned at the selection position.

In this example, the cable selection tool 306 is positioned above the set of cable wires 304A-C. It will be understood that, in other examples, the cable selection tool may have another suitable position and/or orientation relative to the set of cable wires. For instance, in one example, the cable selection tool may be positioned below the set of cable wires, while the cable redirection comb is positioned above the set of cable wires.

As will be described in more detail below, the cable redirection comb 308 includes a plurality of separator projections (e.g., "teeth" of the comb) defining a plurality of cable channels. In the example of FIG. 3A, each cable wire 304A-C extends through a different corresponding cable channel of the cable redirection comb 308. The cable wires 304A-C may be moved into the channels of the cable redirection comb 308 in any suitable way. In some examples, a position (e.g., height) of the cable redirection comb is dynamically adjustable relative to other components of the cable processing system. In this manner, the cable redirection comb may initially be positioned below (or at another suitable height) relative to the cable wires while the cable wires are placed at predefined positions, either automatically or by a human operator. The cable redirection comb may then be moved, either manually or automatically, such that the previously placed cable wires fall within the cable channels of the cable redirection comb.

In the example of FIG. 3A, the set of cable wires 304A-C are transported by a conveyor system 310. For instance, cable selection tool 306 and cable redirection comb 308 may be positioned at a predefined assembly station along an automated assembly line, where one or more different processing operations are applied. By controlling movements of the conveyor system, cables may be moved from one processing station to another. In the specific example of FIG. 3A, the set of two or more cable wires 304A-C are attached to a pallet 312 transported by the conveyor system 310. As will be described in more detail with respect to FIGS. 4A-C, cable wires may in some cases be attached to predefined positions relative to the pallet - e.g., through retention within different channels of a cable separation jig. It will be understood that this specific transportation scenario is non-limiting, and that sets of cable wires may be transported to and/or from a cable processing system in any suitable way.

FIG. 3A additionally schematically shows a camera 314. In some examples, a cable processing system as described herein includes one or more cameras to perform visual inspection of cable wires. This may be done, for instance, to confirm that a current or prior processing operation was successfully completed. For instance, visual inspection may be used to confirm that cable wires are present, cut to a proper length, that jacket scoring and removal was successfully performed, that shield trimming occurred without leaving behind extra strands of shielding material, that a conductive contact was successfully attached, etc. Images captured by cameras may be processed in any suitable way - e.g., through a previously-trained computer vision system, and/or manually by a human operator.

In some examples, visual inspection occurs before, during, or after a tip processing operation is applied. In some examples, "tip processing operations" as described herein include visual inspection via one or more cameras. For instance, in some examples, an automated assembly line may include one or more stations where the only tip processing operation applied is visual inspection via a camera system - e.g., to confirm that one or more preceding tip processing operations were successfully performed. As one example, during visual inspection, every cable wire of a set of cable wires may be selected, such that visual inspection can be performed for each cable wire at once.

It will be understood that any suitable type and number of cameras may be used. For instance, in one example, an array of four cameras is used to capture images of one or more selected cable wires extending into a working region. Such cameras may include visible light cameras, infrared cameras, depth cameras, and/or any other suitable type of camera.

FIG. 3A additionally includes a representation of a controller 316. As used herein, a "controller" includes any suitable combination of computer logic and/or storage hardware usable to carry out any or all of the computerized functions described herein. For instance, in some examples, controller 316 may control movements of cable selection tool 306, cable redirection comb 308, conveyor system 310, behavior of camera 314, behavior of one or more machines used to apply tip processing operations, etc. In some examples, controller 316 is implemented as computing system 900 described below with respect to FIG. 9.

Once the cable processing system receives the set of two or more cable wires, the cable selection tool is moved to contact the set of cable wires. This is schematically illustrated with respect to FIG. 3B, again showing cable processing system 300. In this example, the cable selection tool 306 has been moved to contact the cable redirection comb 308, such that the set of cable wires 304A-C are compressed between the cable selection tool 306 and the cable redirection comb 308. This has caused a first cable wire 304A to extend forward into a working region where cable tip processing operations are applied, as will be described in more detail below. By contrast, cable wires 304B and 304C are bent away from the working region. While in this example, only one cable wire is selected, it will be understood that this is non-limiting. Rather, in other examples, two or more cable wires may be selected at once. In some examples, every cable wire of the set of two or more cable wires is selected.

The cable selection tool is moved toward the set of cable wires at any suitable time and in response to any suitable condition. As one non-limiting example, the controller automatically moves the cable selection tool toward the set of cable wires in response to detecting that the cable wires are properly positioned - e.g., based on input from one or more cameras. As additional examples, the cable selection tool may be automatically moved in response to a timer elapsing and/or an input from a human operator - e.g., once the cable wires are in place, the human operator may press a button or provide another suitable input to cause the cable selection tool to move.

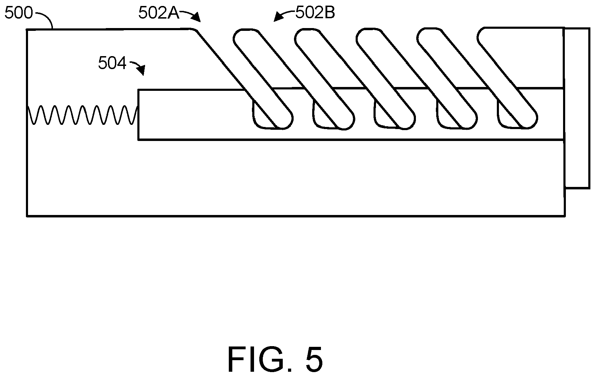

Transportation of a set of cable wires using a conveyor system is schematically illustrated with respect to FIGS. 4A-4C. Specially, FIG. 4A schematically shows aspects of another example cable processing system 400. As shown, in this example, a cable 402 is placed atop a pallet 404 and transported by a conveyor system 406. The cable includes three different cable wires 408A-408C. In this example, each of the cable wires are held within separate channels of a cable separation jig 410 attached to the pallet. Additional non-limiting details relating to a suitable cable separation jig will be described below with respect to FIG. 5. As discussed above, cable processing and selection may in some cases be applied to cable wires extending from both ends of a cable. As such, in some examples, two cable separation jigs may be attached to the same pallet, each holding cable wires extending from a different respective end of the cable.

In this example, the cable processing system 400 additionally includes a cable redirection comb 412, toward which the set of cable wires 408A-C are being moved by the conveyor system 406. As described above with respect to FIGS. 3A and 3B, the cable processing system 400 may additionally include a cable selection tool that, when moved toward the cable redirection comb 412, causes selection of a cable wire at a selection position. An indication of the selection position 414 is shown in FIG. 4A. In this example, the selection position is defined relative to a specific channel of the cable redirection comb 412. In other words, when a particular cable wire is within the selection position, it will be aligned with the designated channel of the cable redirection comb 412. Any cable wires positioned away from the selection position would occupy other cable channels of the cable redirection comb, causing the non-selected cables to move away from the working region once contacted by the cable selection tool.

It will be understood that the specific size and position of the selection position shown in FIG. 4A is non-limiting. In general, the selection position may be defined relative to any suitable cable channel of a cable redirection comb, any single feature of a cable selection tool, and/or any other suitable component of the cable processing system, such that a cable wire positioned in the selection position extends into the working region once contacted by the cable selection tool. In some examples, the selection position is sufficiently large that multiple cable wires may occupy the selection position at once, causing each cable wire to be selected. Additionally, or alternatively, multiple different selection positions may be defined.

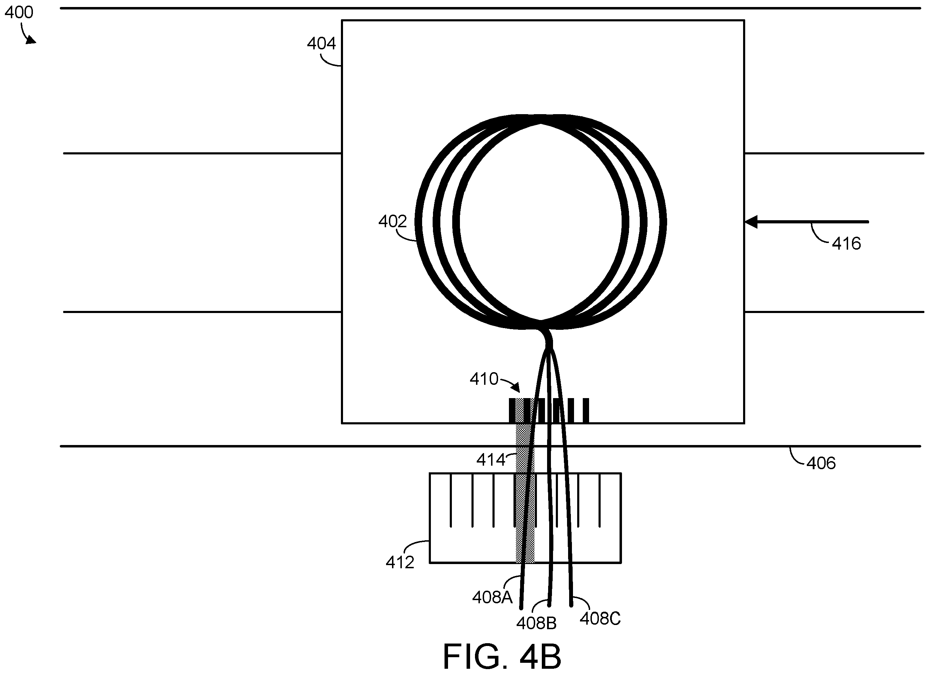

Turning now to FIG. 4B, cable processing system 400 is again schematically shown. In this example, movement of the conveyor system 406 has caused movement of the set of cable wires 408A-C relative to the cable redirection comb 412, as indicated by movement indicator 416. As shown, the movement of the set of cable wires 408A-C has caused a first cable wire 408A to enter the selection position 414. Thus, as illustrated in FIG. 3B, contact with a cable selection tool would cause the first cable wire 408A to extend into a working region, while the other cable wires 408B and 408C positioned away from the selection position are bent away from the working region.

It will be understood that the movements of the conveyor system may be controlled in any suitable way. As one example, the conveyor system may be automatically stopped to position the first cable wire at the selection position. For instance, movement of the conveyor system may be stopped once presence of the first cable wire at the selection position is detected - e.g., via a computer vision system and/or via input by a human operator. As another non-limiting example, movements of the conveyor system may be manually stopped and/or started by a human.

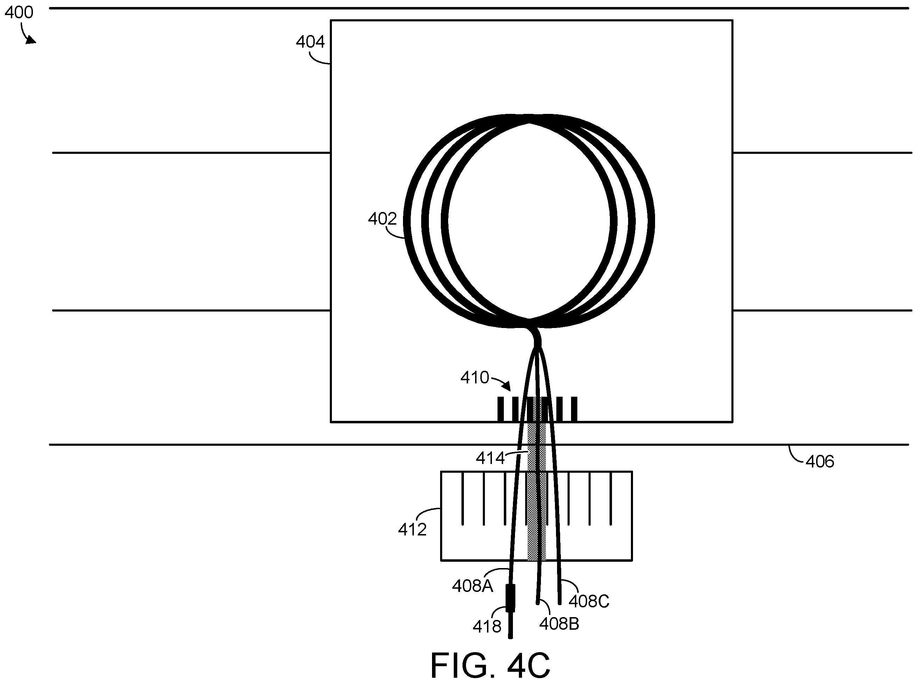

Turning now to FIG. 4C, cable processing system 400 is again schematically shown. Specifically, FIG. 4C shows cable processing system 400 later in time, after tip processing has been applied to first cable wire 408A. In this example, a conductive contact 418 has been attached to the tip portion of first cable wire 408A.

Furthermore, in this example, the conveyor system has been controlled to again move the set of cable wires. In other words, after the tip processing operations (e.g., conductive contact crimping) are applied to the tip portion of the first cable wire 408A, the conveyor system 406 is controlled to move the first cable wire away from the selection position 414, and move a second cable wire 408B toward the selection position 414. From there, while the second cable wire 408B is positioned at the selection position 414, the cable selection tool may again be moved to contact the set of two or more cable wires, causing the tip portion of the second cable wire to extend into the working region where tip processing operations may be applied. Because the first cable wire has been moved away from the selection position, contact with the cable selection tool causes the first cable wire to bend outside of the working region.

As discussed above, the set of two or more cable wires are in some cases attached to a pallet for transportation via a conveyor system using a cable separation jig. FIG. 5 shows aspects of an example cable separation jig 500. As shown, the jig includes several different channels, two of which are labeled as channels 502A and 502B. Cable wires of a cable are held within the different channels of the cable separation jig, which enforces that the cable wires have relatively fixed positions relative to one another and to the pallet. FIG. 5 additionally shows a spring retention mechanism 504 disposed within the cable separation jig, which beneficially compresses cable wires held within the different channels and serves to reduce movement and slippage of the cable wires.

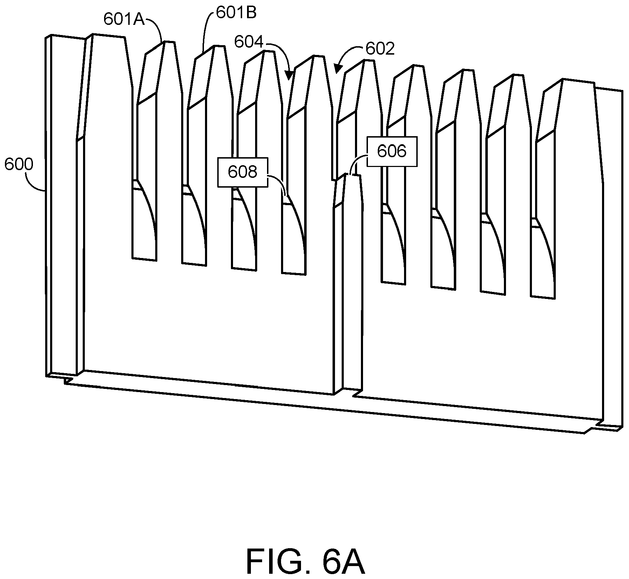

Example components usable with a cable processing system will now be described with respect to FIGS. 6A-D. Specifically, FIG. 6A shows a non-limiting example of a suitable cable redirection comb 600. As discussed above, cable redirection comb 600 is usable to influence the directions in which cable wires extend when the cable wires are compressed between the cable redirection comb and a cable selection tool.

In this example, the cable redirection comb 600 includes a plurality of separator projections, two of which are labeled as projections 601A and 601B. Each pair of separator projections defines a cable channel, such that the cable redirection comb includes a plurality of different cable channels, two of which are labeled as channels 602 and 604. In general, a cable redirection comb includes a selection channel and at least one redirection channel. In FIG. 6A, channel 602 is a cable selection channel, and channel 604 is a cable redirection channel. It will be understood that a cable redirection comb may include any suitable number of total cable channels, any of which may be selection channels and/or redirection channels.

The presence of a cable wire at a selection position, as described above, causes the cable wire to occupy the selection channel of the cable redirection comb. Similarly, the presence of other cable wires away from the selection position causes the other cable wires to occupy redirection channels of the cable redirection comb. As discussed above, this may in some examples be achieved by moving the cable redirection comb toward the set of cable wires after the set of cable wires have been placed at predefined positions, such that the cable wires fall into place within the cable channels as the cable redirection comb moves. In other examples, the cable wires may be fed through or otherwise placed in their corresponding cable channels in another suitable way - e.g., via a suitable automated mechanism or through manual movement by a human operator.

The selection and redirection channels have different geometries to thereby influence the directions in which the cable wires extend after contact with the cable selection tool. As shown in FIG. 6A, the cable selection channel 602 includes a face 606 that guides the tip portion of a cable wire occupying channel 602 toward the working region. In this example, the face of the cable selection channel has a flat geometry. By contrast, redirection channel 604 includes a curved face 608 that guides the tip portion of a second cable wire occupying channel 604 away from the working region. For instance, contact between the second cable wire and a cable selection tool may cause the cable wire to bend along, and conform to, the curved face of the cable redirection channel, which in turn causes the tip of the second cable wire to extend outside of the working region. It will be understood that, in other examples, the faces of the cable channels may have other suitable geometries. For instance, in one example, the face of the cable selection channel may have a cylindrical profile that matches the radius of the cable wire.

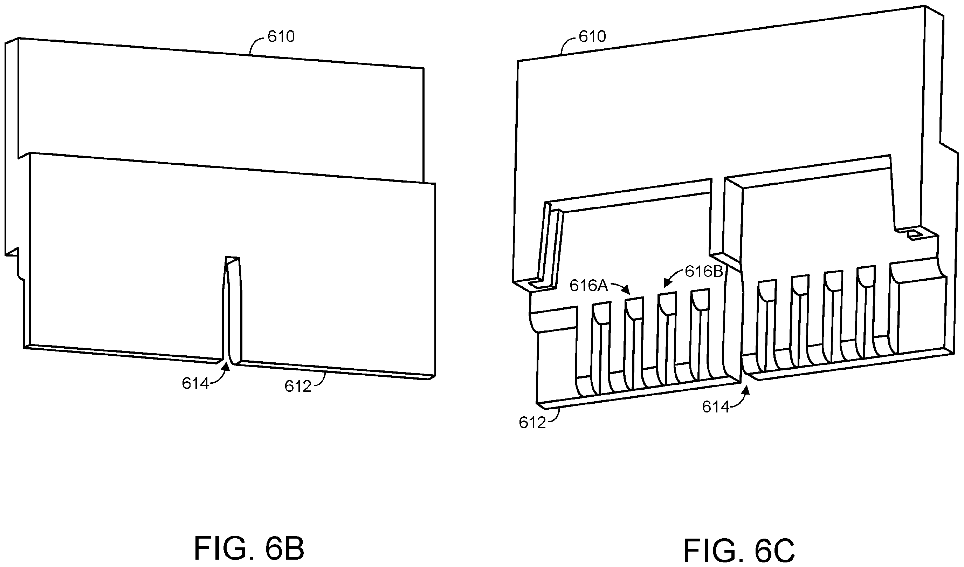

FIGS. 6B and 6C provide two views of an example cable selection tool 610 usable with the cable processing systems described herein. As shown, the cable selection tool 610 includes a notched leading face 612 that contacts one or more of the set of cable wires when the cable selection tool 610 is moved toward the set of cable wires. In this example, the cable selection tool 610 additionally includes a notch 614 in the notched leading face 612 corresponding to the selection position. In other words, when the cable selection tool 610 is moved toward the set of cable wires, a cable wire at the selection position occupies the notch 614 in the notched leading face 612. This, in tandem with the geometry of the cable redirection comb described above, causes the cable wire at the selection position to extend into the working region. Contact between the notched leading face and any cable wires positioned away from the selection position causes the tip portions of the non-selected cable wires to bend outside of the working region - e.g., as guided by the curved faces of the cable redirection channels of the cable redirection comb. In examples where it is intended that two or more cable wires are selected at once, an alternate cable selection tool may be used having more than one notch, and/or a notch sized to accommodate two or more cable wires at once.

Additionally, in FIG. 6C, the cable selection tool 610 includes several guidance channels corresponding to cable wire positions away from the notch 614, two of which are labeled as guidance channels 616A and 616B. The guidance channels additionally serve to direct the non-selected cable channels away from the working region.

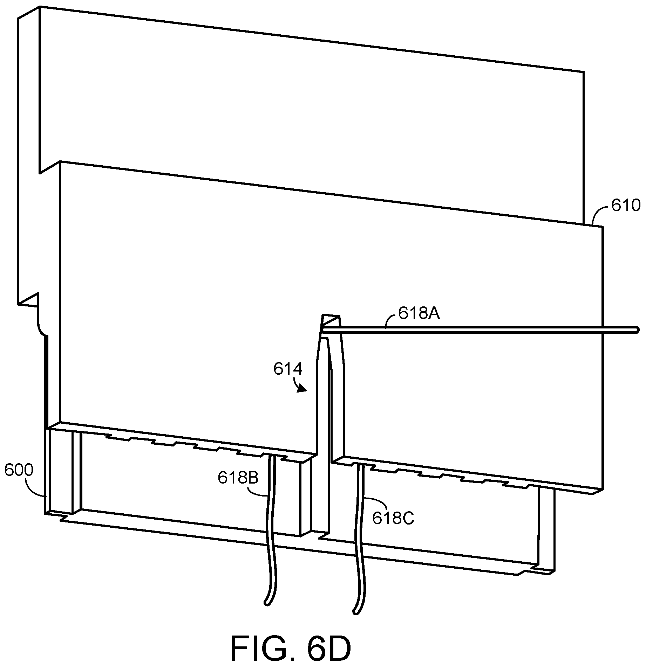

FIG. 6D again shows the cable redirection comb 600 and cable selection tool 610. However, in this example, the cable selection tool 610 has been moved toward the cable redirection comb 600, and a set of cable wires 618A-C are compressed between the cable selection tool 610 and the cable redirection comb 600. As shown, a first cable wire 618A occupies notch 614. The geometry of the cable selection tool and cable redirection comb together cause the first cable wire to extend into a working region, while non-selected cable wires 618B and 618C are bent outside of the working region.

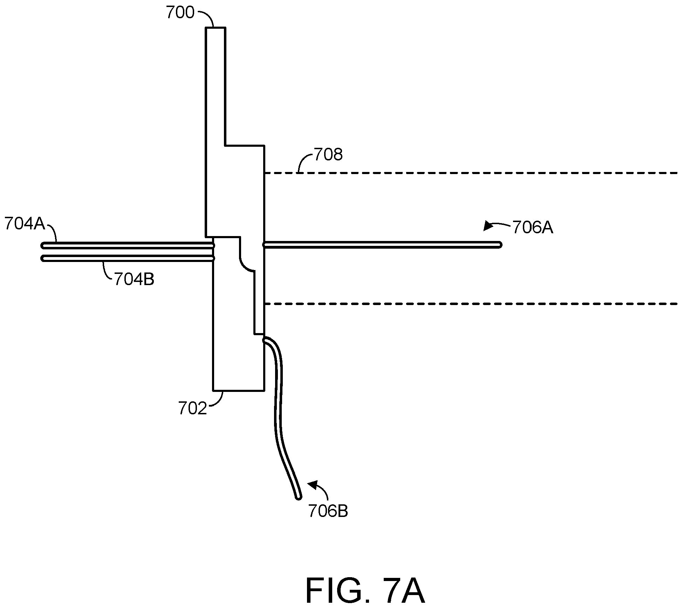

Returning briefly to FIG. 2, at 206, method 200 includes applying one or more tip processing operations to the tip portion of a cable wire extending into the working region. This is schematically illustrated with respect to FIGS. 7A-7C. Specifically, FIG. 7A schematically represents aspects of an example cable selection tool 700, which is contacting a cable redirection comb 702, such that two cable wires 704A and 704B are compressed between the cable selection tool and cable redirection comb. A tip portion 706A of first cable wire 704A extends into a working region 708. A tip portion 706B of a second, non-selected cable wire bends outside of the working region 708.

In this example, the working region 708 is represented as a region of space extending perpendicular to a movement direction of the cable selection tool 700. It will be understood that the specific size, shape, and position of the working region 708 shown in FIG. 7A is non-limiting. As discussed above, a working region is defined as a predetermined region of space in which one or more tip processing operations can be applied to a cable tip portion present within the working region. As such, the specific properties of the working region will vary depending on the implementation - e.g., depending on the specific tip processing operations applied, and depending on the specific capabilities and range-of-motion of any tools or systems used to perform the tip processing operations.

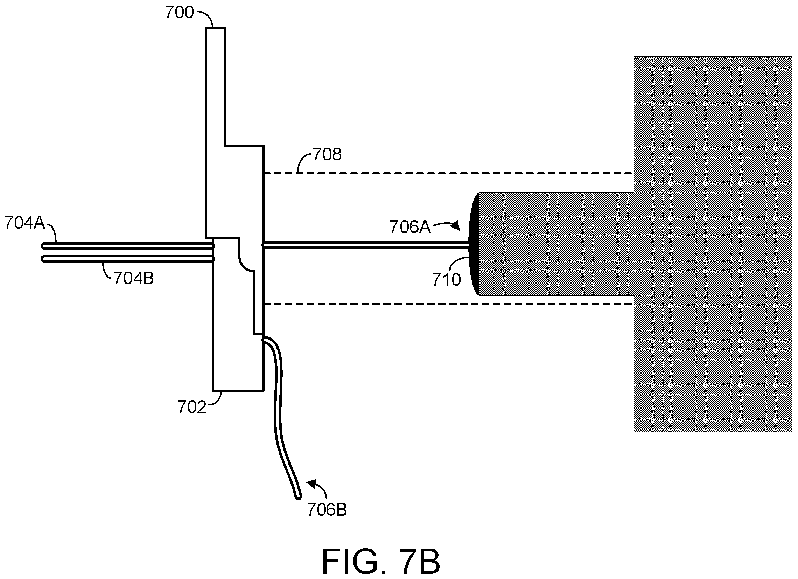

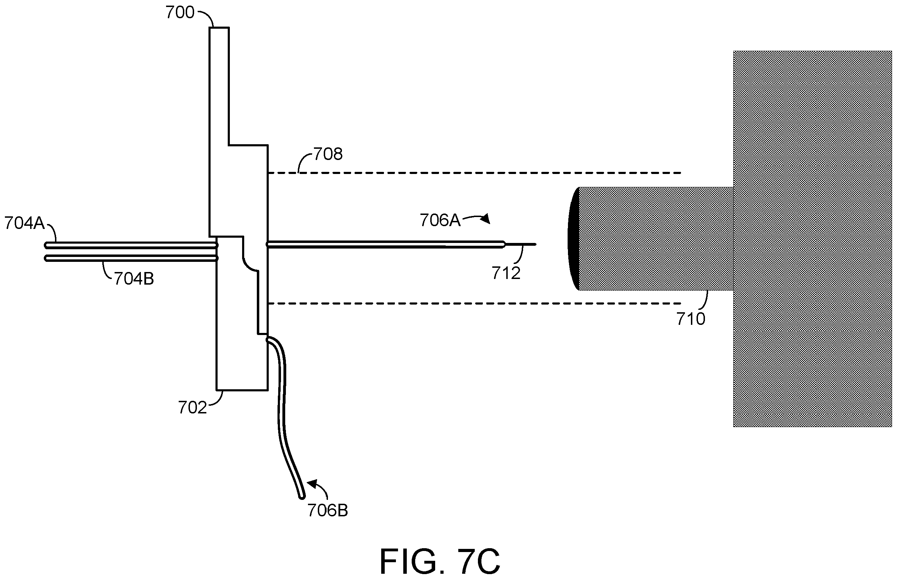

In FIG. 7B, the tip portion 706A of the first cable wire 704A is inserted into a processing tool 710, configured to apply processing operations to the cable tip. It will be understood that the processing tool 710 takes any suitable form depending on the implementation and depending on the specific type of tip processing operations to be applied. In this example, the one or more tip processing operations include scoring and removal of a portion of an insulated jacket of the cable wire. This is schematically illustrated with respect to FIG. 7C, in which the processing tool has been used to remove a portion of the insulated jacket of cable wire 704A, thereby exposing a conductive core 712 of the cable wire.

The processing tool is controlled in any suitable way. In some examples, the processing tool is automatically moved (e.g., by a controller of a cable processing system) toward and/or away from the cable tip. For example, upon detecting that a cable wire is present within the working region (e.g., via a computer vision system), the controller may cause the processing tool to move toward the cable tip, automatically apply a tip processing operation to the cable tip, and then move away from the cable tip. Additionally, or alternatively, a human operator may move the processing tool, and/or otherwise control operation of the processing tool.

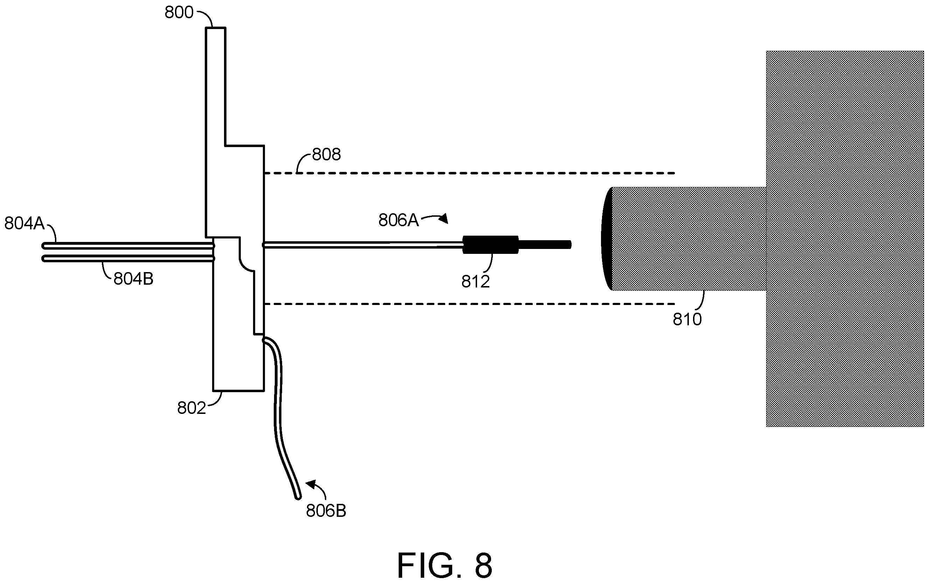

FIG. 8 schematically illustrates another non-limiting tip processing operation. Specifically, FIG. 8 schematically shows aspects of another example cable selection tool 800 and cable redirection comb 802, which are compressing a first cable wire 804A and a second cable wire 804B. A tip portion 806A of the first cable wire 804A extends into a working region 808, while the tip portion 806B of the second cable wire extends away from the working region 808.

In this example, another example processing tool 810 has been used to attach a conductive contact 812 to the tip of the first cable wire 804A. This may include, for instance, crimping the conductive contact to the conductive end of the first cable wire via an automated cable contact attachment system. It will be understood that any suitable automated crimping system may be used to attach conductive contacts to cable tips as described herein.

As discussed above, in some cases, tip processing operations may be applied to the tip portions of different cable wires simultaneously and/or sequentially. For instance, in some examples, two or more cable wires may be selected and caused to extend into the working region at the same time, such that both cable tips are processed at once. Additionally, or alternatively, after applying tip processing to a first cable wire, the set of two or more cable wires may be moved such that the first cable wire moves away from the selection position, while a second cable wire moves toward the selection position. This may be repeated any suitable number of times depending on how many cable wires require processing.

To this end, returning briefly to FIG. 2, at 208, method 200 includes determining whether processing should be applied to additional cable wires. This may be determined in any suitable way. For instance, in some examples, cable tip processing may be sequentially applied to different cable wires until a predetermined number of cable wires have been processed, a predetermined amount of time has passed, a predefined stopping time has been reached, the system detects that no more cable wires are present (e.g., via a computer vision system), the system is deactivated by a human operator, and/or in response to any other suitable condition.

If it is determined that more cable wires are present for processing (e.g., yes at 208) then method 200 proceeds to step 210, which includes moving the set of cable wires such that a last-processed cable wire is moved away from the selection position, and a next cable wire is moved to the selection position. From there, method 200 returns to step 204, where the cable selection tool is moved to contact the set of cable wires to thereby cause any cable wires present at the selection position to extend into the working region. If it is determined that no more cable wire processing should be performed, method 200 ends at 212.

The methods and processes described herein may be tied to a computing system of one or more computing devices. In particular, such methods and processes may be implemented as an executable computer-application program, a network-accessible computing service, an application-programming interface (API), a library, or a combination of the above and/or other compute resources.

FIG. 9 schematically shows a simplified representation of a computing system 900 configured to provide any to all of the compute functionality described herein. Computing system 900 may take the form of one or more network-accessible devices, personal computers, server computers, mobile computing devices, embedded computing devices, and/or other computing devices.

Computing system 900 includes a logic subsystem 902 and a storage subsystem 904. Computing system 900 may optionally include a display subsystem 906, input subsystem 908, communication subsystem 910, and/or other subsystems not shown in FIG. 9.

Logic subsystem 902 includes one or more physical devices configured to execute instructions. For example, the logic subsystem may be configured to execute instructions that are part of one or more applications, services, or other logical constructs. The logic subsystem may include one or more hardware processors configured to execute software instructions. Additionally, or alternatively, the logic subsystem may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem optionally may be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 904 includes one or more physical devices configured to temporarily and/or permanently hold computer information such as data and instructions executable by the logic subsystem. When the storage subsystem includes two or more devices, the devices may be collocated and/or remotely located. Storage subsystem 904 may include volatile, nonvolatile, dynamic, static, read/write, read-only, random-access, sequential-access, location-addressable, file-addressable, and/or content-addressable devices. Storage subsystem 904 may include removable and/or built-in devices. When the logic subsystem executes instructions, the state of storage subsystem 904 may be transformed - e.g., to hold different data.

Aspects of logic subsystem 902 and storage subsystem 904 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

When included, display subsystem 906 may be used to present a visual representation of data held by storage subsystem 904. This visual representation may take the form of a graphical user interface (GUI). Display subsystem 906 may include one or more display devices utilizing virtually any type of technology. In some implementations, display subsystem may include one or more virtual-, augmented-, or mixed reality displays.

When included, input subsystem 908 may comprise or interface with one or more input devices. An input device may include a sensor device or a user input device. Examples of user input devices include a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 910 may be configured to communicatively couple computing system 900 with one or more other computing devices. Communication subsystem 910 may include wired and/or wireless communication devices compatible with one or more different communication protocols. The communication subsystem may be configured for communication via personal-, local- and/or wide-area networks.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

In an example, a method for automated cable wire processing comprises: receiving a set of two or more cable wires, including at least a first cable wire positioned at a selection position, and a second cable wire positioned away from the selection position, automatically moving a cable selection tool to contact the set of two or more cable wires, such that contact between the cable selection tool and the first cable wire causes a tip portion of the first cable wire to extend into a working region, and contact between the cable selection tool and the second cable wire moves a tip portion of the second cable wire outside of the working region; and applying one or more tip processing operations to the tip portion of the first cable wire within the working region. In this example or any other example, said moving the cable selection tool causes the cable selection tool to move toward a cable redirection comb and compress the set of two or more cable wires between the cable selection tool and the cable redirection comb. In this example or any other example, the cable redirection comb includes a plurality of separator projections defining a plurality of cable channels, including a selection channel and a redirection channel, and wherein presence of the first cable wire at the selection position causes the first cable wire to occupy the selection channel, and wherein presence of the second cable wire away from the selection position causes the second cable wire to occupy the redirection channel. In this example or any other example, the selection channel includes a face that guides the tip portion of the first cable wire toward the working region, and wherein the redirection channel includes a curved face that guides the tip portion of the second cable wire outside of the working region. In this example or any other example, the cable selection tool includes a notched leading face, wherein contact between the notched leading face and the second cable wire moves the tip portion of the second cable wire outside of the working region, and wherein the first cable wire occupies a notch in the notched leading face. In this example or any other example, the set of two or more cable wires are transported by a conveyor system, and wherein said receiving the set of two or more cable wires includes stopping movement of the conveyor system to position the first cable wire at the selection position. In this example or any other example, the method further comprises, after applying the one or more tip processing operations to the tip portion of the first cable wire, controlling the conveyor system to move the first cable wire away from the selection position and move the second cable wire to the selection position. In this example or any other example, the method further comprises, while the second cable wire is positioned at the selection position: automatically moving the cable selection tool to contact the set of two or more cable wires, such that contact between the cable selection tool and the second cable wire causes the tip portion of the second cable wire to extend into the working region, and contact between the cable selection tool and the first cable wire moves the tip portion of the first cable wire outside of the working region; and applying the one or more tip processing operations to the tip portion of the second cable wire within the working region. In this example or any other example, the set of two or more cable wires are attached to a pallet transported by the conveyor system. In this example or any other example, each of the set of two or more cable wires are held within separate channels of a cable separation jig attached to the pallet. In this example or any other example, the one or more tip processing operations include scoring and removal of a portion of an insulated jacket of the first cable wire. In this example or any other example, the one or more tip processing operations include attachment of a conductive contact to the first cable wire. In this example or any other example, said attachment of the conductive contact includes, at a cable contact attachment system, crimping the conductive contact to a conductive end of the first cable wire. In this example or any other example, the set of two or more cable wires are bundled together in a common insulated jacket as a single multi-conductor cable.

In an example, a cable tip processing system comprises: a controller configured to: control movements of a conveyor system to position a first cable wire from a set of two or more cable wires at a selection position, and position a second cable wire from the set of two or more cable wires away from the selection position; move a cable selection tool to contact the set of two or more cable wires, such that contact between the cable selection tool and the first cable wire causes a tip portion of the first cable wire to extend into a working region, and contact between the cable selection tool and the second cable wire moves a tip portion of the second cable wire outside of the working region; and apply one or more tip processing operations to the tip portion of the first cable wire within the working region. In this example or any other example, moving the cable selection tool causes the cable selection tool to move toward a cable redirection comb and compress the set of two or more cable wires between the cable selection tool and the cable redirection comb. In this example or any other example, the controller is further configured to, after the one or more tip processing operations are applied to the tip portion of the first cable wire, control the conveyor system to move the first cable wire away from the selection position and move the second cable wire to the selection position. In this example or any other example, the one or more tip processing operations include scoring and removal of a portion of an insulated jacket of the first cable wire. In this example or any other example, the one or more tip processing operations include attachment of a conductive contact to the first cable wire.

In an example, a method for automated conductive contact attachment comprises: receiving a set of two or more cable wires, including at least a first cable wire positioned at a selection position, and a second cable wire positioned away from the selection position; automatically moving a cable selection tool to contact the set of two or more cable wires, such that contact between the cable selection tool and the first cable wire causes a tip portion of the first cable wire to extend into a working region, and contact between the cable selection tool and the second cable wire moves a tip portion of the second cable wire outside of the working region; and automatically attaching a conductive contact to the tip portion of the first cable wire via a cable contact attachment system.

## Claims

1. A method (200) for automated cable wire processing, the method (200) comprising:
receiving a set of two or more cable wires (304A-C), including at least a first cable wire (304A) positioned at a selection position (414), and a second cable wire positioned (304B) away from the selection position (414);
automatically moving a cable selection tool (306) to contact the set of two or more cable wires (304A-C), such that contact between the cable selection tool (306) and the first cable wire (304A) causes a tip portion (706A) of the first cable wire (304A) to extend into a working region (708), and contact between the cable selection tool (306) and the second cable wire (304B) moves a tip portion (706B) of the second cable wire (304B) outside of the working region (708); and
applying one or more tip processing operations to the tip portion (704A) of the first cable wire (304A) within the working region (708).

2. The method (200) of claim 1, wherein said moving the cable selection tool (306) causes the cable selection tool (306) to move toward a cable redirection comb (308) and compress the set of two or more cable wires (304A-C) between the cable selection tool (306) and the cable redirection comb (308).

3. The method (200) of claim 2, wherein the cable redirection comb (308) includes a plurality of separator projections (601A, B) defining a plurality of cable channels (602, 604), including a selection channel (602) and a redirection channel (604), and wherein presence of the first cable wire (304A) at the selection position (414) causes the first cable wire (304A) to occupy the selection channel (602), and wherein presence of the second cable wire (304B) away from the selection position (414) causes the second cable wire (304B) to occupy the redirection channel (604),
preferably wherein the selection channel (602) includes a face (606) that guides the tip portion (706A) of the first cable wire (304A) toward the working region (708), and wherein the redirection channel (604) includes a curved face (708) that guides the tip portion (706B) of the second cable wire (304B) outside of the working region (708).

4. The method (200) of claim 2 or 3, wherein the cable selection tool (306) includes a notched leading face (612), wherein contact between the notched leading face (612) and the second cable wire (304B) moves the tip portion (706B) of the second cable wire (304B) outside of the working region (708), and wherein the first cable wire (304A) occupies a notch (614) in the notched leading face (612).

5. The method (200) of any of the preceding claims, wherein the set of two or more cable wires (304A-C) are transported by a conveyor system (310), and wherein said receiving the set of two or more cable wires (304A-C) includes stopping movement of the conveyor system (310) to position the first cable wire (304A) at the selection position (414),
preferably further comprising, after applying the one or more tip processing operations to the tip portion (706A) of the first cable wire (304A), controlling the conveyor system (310) to move the first cable wire (304A) away from the selection position (414) and move the second cable wire (304B) to the selection position (414),
preferably further comprising, while the second cable wire (304B) is positioned at the selection position (414):
automatically moving the cable selection tool (306) to contact the set of two or more cable wires (304A-C), such that contact between the cable selection tool (306) and the second cable wire (304B) causes the tip portion (706B) of the second cable wire (304B) to extend into the working region (708), and contact between the cable selection tool (306) and the first cable wire (304A) moves the tip portion (706A) of the first cable wire (304A) outside of the working region (708); and
applying the one or more tip processing operations to the tip portion (706B) of the second cable wire (304B) within the working region (708).

6. The method (200) of claim 5, wherein the set of two or more cable wires (304A-C) are attached to a pallet (312) transported by the conveyor system (310),
preferably wherein each of the set of two or more cable wires (304A-C) are held within separate channels (502A, B) of a cable separation jig (500) attached to the pallet (312).

7. The method (200) of any of the preceding claims, wherein the one or more tip processing operations include scoring and removal of a portion of an insulated jacket (102C) of the first cable wire (304A).

8. The method (200) of any of the preceding claims, wherein the one or more tip processing operations include attachment of a conductive contact (106A) to the first cable wire (304A),
preferably wherein said attachment of the conductive contact (106A) includes, at a cable contact attachment system (810), crimping the conductive contact (106A) to a conductive end (104) of the first cable wire (304A).

9. The method (200) of any of the preceding claims, wherein the set of two or more cable wires (304A-C) are bundled together in a common insulated jacket as a single multi-conductor cable (100).

10. A cable tip processing system (300), comprising:
a controller (316) configured to:
control movements of a conveyor system (310) to position a first cable wire (304A) from a set of two or more cable wires (304A-C) at a selection position (414), and position a second cable wire (304B) from the set of two or more cable wires (304A-C) away from the selection position (414);
move a cable selection tool (306) to contact the set of two or more cable wires (304A-C), such that contact between the cable selection tool (306) and the first cable wire (304A) causes a tip portion (706A) of the first cable wire (304A) to extend into a working region (708), and contact between the cable selection tool (306) and the second cable wire (304B) moves a tip portion (706B) of the second cable wire (304B) outside of the working region (708); and
apply one or more tip processing operations to the tip portion (706A) of the first cable wire (304A) within the working region (708).

11. The cable tip processing system (300) of claim 10, wherein moving the cable selection tool (306) causes the cable selection tool (306) to move toward a cable redirection comb (308) and compress the set of two or more cable wires (304A-C) between the cable selection tool (306) and the cable redirection comb (308).

12. The cable tip processing system (300) of claim 10 or 11, wherein the controller (316) is further configured to, after the one or more tip processing operations are applied to the tip portion (706A) of the first cable wire (304A), control the conveyor system (310) to move the first cable wire (304A) away from the selection position (414) and move the second cable wire (304B) to the selection position (414).

13. The cable tip processing system (300) of any of claims 10-12, wherein the one or more tip processing operations include scoring and removal of a portion of an insulated jacket (102C) of the first cable wire (304A).

14. The cable tip processing system (300) of any of claims 10-13, wherein the one or more tip processing operations include attachment of a conductive contact (106A) to the first cable wire (304A).

15. A method (200) for automated conductive contact attachment, the method (200) comprising:
receiving a set of two or more cable wires (304A-C), including at least a first cable wire (304A) positioned at a selection position (414), and a second cable wire (304B) positioned away from the selection position (414);
automatically moving a cable selection tool (306) to contact the set of two or more cable wires (304A-C), such that contact between the cable selection tool (306) and the first cable wire (304A) causes a tip portion (806A) of the first cable wire (304A) to extend into a working region (808), and contact between the cable selection tool (306) and the second cable wire (304B) moves a tip portion (806B) of the second cable wire (304B) outside of the working region (808); and
automatically attaching a conductive contact (106A) to the tip portion (806A) of the first cable wire (304A) via a cable contact attachment system (300).
